(19) Europäisches Patentamt
European Patent Office
Office européen des brevets

(11) **EP 4 190 857 A1**

(12) **EUROPEAN PATENT APPLICATION**
published in accordance with Art. 153(4) EPC

(43) Date of publication:
**07.06.2023 Bulletin 2023/23**

(21) Application number: **21850824.0**

(22) Date of filing: **02.07.2021**

(51) International Patent Classification (IPC):
*C08L 21/02* $^{(2006.01)}$    *C08K 5/13* $^{(2006.01)}$
*C08K 5/3495* $^{(2006.01)}$    *C08K 5/38* $^{(2006.01)}$
*C08L 7/02* $^{(2006.01)}$    *C08L 9/10* $^{(2006.01)}$
*C08L 13/02* $^{(2006.01)}$

(52) Cooperative Patent Classification (CPC):
**C08K 5/13; C08K 5/3495; C08K 5/38; C08L 7/02;
C08L 9/10; C08L 13/02; C08L 21/02**

(86) International application number:
**PCT/JP2021/025192**

(87) International publication number:
**WO 2022/024672 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.07.2020   JP 2020128533**

(71) Applicant: **Zeon Corporation
Tokyo 100-8246 (JP)**

(72) Inventor: **KODEMURA, Junji
Tokyo 100-8246 (JP)**

(74) Representative: **Beckmann, Claus
Kraus & Weisert
Patentanwälte PartGmbB
Thomas-Wimmer-Ring 15
80539 München (DE)**

(54) **FILM MOLDED BODY**

(57)    Provided is a molded film having a thickness of 20 to 300 um and obtained using a latex composition comprising a conjugated diene polymer latex, a sulfur-based vulcanizing agent, a vulcanization accelerator, and an antioxidant, wherein the antioxidant is at least one selected from phenolic antioxidants and quinoline antioxidants, and has a molecular weight of 300 to 600.

EP 4 190 857 A1

**Description**

TECHNICAL FIELD

The present invention relates to a molded film.

BACKGROUND ART

Conventionally, it has been known that molded films, such as dip-molded articles (e.g., teats, balloons, gloves, balloons, and stalls), used in contact with the human body can be obtained by dip molding a composition for dip molding containing rubber latex. Molded films, such as dip-molded articles, are required to have excellent tensile strength because such molded films can be suitably used in these applications.

For example, Patent Document 1 discloses a dip-molded article obtained by dip molding a composition for dip molding containing a synthetic polyisoprene latex, a sulfur-based vulcanizing agent, zinc oxide, a vulcanization accelerator, a specific dispersant, and a specific amount of a monovalent salt of a dithiocarbamic acid. According to Patent Document 1, a dip-molded article which has excellent tensile strength can be obtained.

RELATED ART DOCUMENTS

PATENT DOCUMENT

Patent Document 1: JP 2011-219543 A

SUMMARY OF THE INVENTION

PROBLEM TO BE SOLVED BY THE INVENTION

On the other hand, in recent years, the required characteristics of the molded film, such as a dip-molded article, have become stricter, and a molded film, such as a dip-molded article, having mechanical strength which is less likely to decrease when stored at a high temperature (for example, about 70°C) is required. The present invention is completed in view of solving the problem above. It is an objective of the present invention to provide a molded film having mechanical strength which is less likely to decrease when stored at a high temperature.

MEANS FOR SOLVING THE PROBLEMS

As a result of dedicated research to achieve the aforementioned objective, the inventor has found that a molded film obtained using a latex composition comprising a conjugated diene polymer latex, a cross-linking agent, a cross-linking accelerator, and an antioxidant having a specific structure and a specific molecular weight can have mechanical strength which is less likely to decrease when stored at a high temperature. This finding has led to the completion of the present invention.

In other words, the present invention provides a molded film having a thickness of 20 to 300 $\mu$m and obtained using a latex composition comprising a conjugated diene polymer latex, a sulfur-based vulcanizing agent, a vulcanization accelerator, and an antioxidant, wherein the antioxidant is at least one selected from phenolic antioxidants and quinoline antioxidants, and has a molecular weight of 300 to 600.

In the molded film according to the present invention, the antioxidant preferably contains at least an aromatic compound (a) having two or more phenolic hydroxyl groups.

In the molded film according to the present invention, the antioxidant preferably contains at least an aromatic compound (a-1) having two or more hindered phenol structures.

In the molded film according to the present invention, the antioxidant preferably contains at least an aromatic compound (a-2) having a diphenylmethane skeleton having two or more hindered phenol structures.

In the molded film according to the present invention, the antioxidant preferably contains an aromatic compound (a) having two or more phenolic hydroxyl groups, and an aromatic compound (b-1) having one phenolic hydroxyl group and one or more -NH- bonds.

In the molded film according to the present invention, the conjugated diene polymer latex is preferably a synthetic polyisoprene latex, a styrene-isoprene-styrene block copolymer latex, or a natural rubber latex.

In the molded film according to the present invention, the conjugated diene polymer latex is preferably a carboxy-modified conjugated diene polymer latex.

In the molded film according to the present invention, the swell index (SI) of the conjugated diene polymer is preferably 105 to 300%.

In the molded film according to the present invention, the content of the sulfur-based vulcanizing agent in the latex composition is preferably 0.1 to 1.2 parts by weight with respect to 100 parts by weight of the conjugated diene polymer in the latex composition.

In the molded film according to the present invention, the cross-linking accelerator is preferably a xanthogen compound.

EFFECTS OF THE INVENTION

The present invention can provide a molded film having mechanical strength which is less likely to decrease when stored at a high temperature.

DESCRIPTION OF EMBODIMENTS

The molded film according to the present invention can be obtained using a latex composition comprising a conjugated diene polymer latex, a sulfur-based vulcanizing agent, a vulcanization accelerator, and an antioxidant having a specific structure and a specific molecular weight.

Studies by the present inventor have revealed a problem that even a molded film having excellent mechanical properties such as tensile strength and tear strength at normal temperature exhibits a significant decrease in mechanical strength when stored at a high temperature (for example, about 70°C) in the case where the film thickness is as thin as 20 to 300 $\mu$m. As a result of dedicated research to suppress a decrease in mechanical strength of the molded film having a film thickness as thin as 20 to 300 $\mu$m when stored at a high temperature (for example, about 70°C), the inventor has found that the aforementioned objective can be achieved by a molded film obtained using a latex composition comprising a conjugated diene polymer latex, a cross-linking agent, a cross-linking accelerator, and an antioxidant having a specific structure and a specific molecular weight. This finding has led to the completion of the present invention.

<Latex Composition>

The latex composition used in the present invention contains a conjugated diene polymer latex.

Examples of the conjugated diene polymer contained in the conjugated diene polymer latex include, but are not limited to, synthetic polyisoprenes, styrene-isoprene-styrene block copolymers (SISs), natural rubbers (including protein-free natural rubbers), and the like. The conjugated diene polymer is preferably a synthetic polyisoprene, a styrene-isoprene-styrene block copolymer (SIS), or a natural rubber (which may be a protein-free natural rubber), more preferably a synthetic polyisoprene, a styrene-isoprene-styrene block copolymer (SIS), or a protein-free natural rubber, further more preferably a synthetic polyisoprene or a styrene-isoprene-styrene block copolymer (SIS), particularly preferably a synthetic polyisoprene.

When a synthetic polyisoprene is used as the conjugated diene polymer, the synthetic polyisoprene may be an isoprene homopolymer, or may be a copolymer of isoprene and a different ethylenically unsaturated monomer copolymerizable with isoprene. The content of isoprene units in the synthetic polyisoprene is preferably 70 wt% or more, more preferably 90 wt% or more, further more preferably 95 wt% or more, particularly preferably 100 wt% (homopolymer of isoprene) with respect to the total monomer units. Adjusting the content of isoprene units in the synthetic polyisoprene within the above ranges allows the molded film according to the present invention to have mechanical strength which is less likely to decrease when it is stored at a high temperature.

Examples of different ethylenically unsaturated monomers copolymerizable with isoprene include conjugated diene monomers other than isoprene, such as butadiene, chloroprene, and 1,3-pentadiene; ethylenically unsaturated nitrile monomers, such as acrylonitrile, methacrylonitrile, fumaronitrile, and $\alpha$-chloroacrylonitrile; vinyl aromatic monomers, such as styrene and alkyl styrenes; ethylenically unsaturated carboxylic acid ester monomers, such as methyl (meth)acrylate (which means "methyl acrylate and/or methyl methacrylate", and hereinafter, the same applies to ethyl (meth)acrylate and the like), ethyl (meth)acrylate, butyl (meth)acrylate, and 2-ethylhexyl (meth)acrylate; and the like. One of these ethylenically unsaturated monomers copolymerizable with isoprene may be used alone, or two or more of them may be used in combination.

The synthetic polyisoprene can be obtained by a conventionally known method such as solution polymerization of isoprene optionally with a different ethylenically unsaturated copolymerizable monomer in an inert polymerization solvent using a Ziegler polymerization catalyst composed of trialkylaluminum-titanium tetrachloride or an alkyl lithium polymerization catalyst such as n-butyl lithium or sec-butyl lithium. Although the polymer solution of synthetic polyisoprene obtained by the solution polymerization may be used as it is as a synthetic polyisoprene latex, solid synthetic polyisoprene may be extracted from the polymer solution and be dissolved in an organic solvent to prepare a solution, which is a synthetic polyisoprene latex. Also, in the case where a synthetic polyisoprene solution is prepared by the above-mentioned method, impurities including residual polymerization catalyst in the polymer solution may be removed. Further, an antioxidant described below may be added to the solution during or after polymerization. Alternatively, commercially available solid synthetic polyisoprene may be used.

There are the following four types of isoprene units in the synthetic polyisoprene which differ in bonding geometry of isoprene units: cis bond unit, trans bond unit, 1,2-vinyl bond unit, and 3,4-vinyl bond unit. In order to obtain a molded film, such as a dip-molded article, having enhanced tensile strength, the content of cis bond units among the isoprene units contained in the synthetic polyisoprene is preferably 70 wt% or more, more preferably 90 wt% or more, further more preferably 95 wt% or more with respect to the total isoprene units.

The weight average molecular weight of the synthetic polyisoprene is preferably 10,000 to 5,000,000, more preferably 500,000 to 5,000,000, further more preferably 800,000 to 3,000,000 as calibrated against polystyrene standards by gel permeation chromatography. Adjusting the weight average molecular weight of the synthetic polyisoprene within the above ranges allows the molded film according to the present invention to have mechanical strength which is less likely to decrease when it is stored at a high temperature, and tends to facilitate the production of the synthetic polyisoprene latex.

The polymer Mooney viscosity (ML1+4, 100°C) of the synthetic polyisoprene is preferably 50 to 85, more preferably 60 to 85, further more preferably 70 to 85.

Examples of methods for providing the synthetic polyisoprene latex include (1) a method for producing the synthetic polyisoprene latex by emulsifying a solution or microsuspension of the synthetic polyisoprene, which is dissolved or finely dispersed in an organic solvent, in water in the presence of an anionic surfactant, followed by removal of the organic solvent, as required, and (2) a method for directly producing the synthetic polyisoprene latex by emulsion polymerization or suspension polymerization of isoprene alone or a mixture of isoprene with an ethylenically unsaturated monomer copolymerizable with isoprene in the presence of an anionic surfactant. The aforementioned production method (1) is preferable since this method allows the use of a synthetic polyisoprene in which cis bond units occupy a high proportion of the total isoprene units, and allows the molded film according to the present invention to have mechanical strength which is less likely to decrease when it is stored at a high temperature.

Examples of organic solvents usable in the aforementioned production method (1) include aromatic hydrocarbon solvents such as benzene, toluene, and xylene; alicyclic hydrocarbon solvents such as cyclopentane, cyclopentene, cyclohexane, and cyclohexene; aliphatic hydrocarbon solvents such as pentane, hexane, and heptane; halogenated hydrocarbon solvents such as methylene chloride, chloroform, and ethylene dichloride; and the like. Among these, preferred are alicyclic hydrocarbon solvents, and particularly preferred is cyclohexane.

The amount of the organic solvent used is preferably 2,000 parts by weight or less, more preferably 20 to 1,500 parts by weight, further more preferably 500 to 1500 with respect to 100 parts by weight of the synthetic polyisoprene.

Examples of the anionic surfactant used in the aforementioned production method (1) include fatty acid salts such as sodium laurate, potassium myristate, sodium palmitate, potassium oleate, sodium linolenate, and sodium rosinate; alkylbenzene sulfonates such as sodium dodecylbenzenesulfonate, potassium dodecylbenzenesulfonate, sodium decylbenzenesulfonate, potassium decylbenzenesulfonate, sodium cetylbenzenesulfonate, and potassium cetylbenzenesulfonate; alkyl sulfosuccinates such as sodium di(2-ethylhexyl) sulfosuccinate, potassium di(2-ethylhexyl) sulfosuccinate, and sodium dioctyl sulfosuccinate; alkyl sulfate ester salts such as sodium lauryl sulfate and potassium lauryl sulfate; polyoxyethylene alkyl ether sulfate ester salts such as sodium polyoxyethylene lauryl ether sulfate and potassium polyoxyethylene lauryl ether sulfate; monoalkyl phosphate salts such as sodium lauryl phosphate and potassium lauryl phosphate; and the like.

Among these anionic surfactants, preferred are fatty acid salts, alkylbenzene sulfonates, alkyl sulfosuccinates, alkyl sulfate ester salts, and polyoxyethylene alkyl ether sulfate ester salts, and particularly preferred are fatty acid salts and alkylbenzene sulfonates.

A combination of at least one selected from the group consisting of alkylbenzene sulfonates, alkyl sulfosuccinates, alkyl sulfate ester salts, and polyoxyethylene alkyl ether sulfate ester salts and a fatty acid salt is preferably used, and a combination of an alkylbenzene sulfonate and a fatty acid salt is particularly preferably used, because a trace of residual polymerization catalyst (in particular, aluminum and titanium) derived from the synthetic polyisoprene can be more efficiently removed and the occurrence of aggregates is suppressed in the process of producing a conjugated diene polymer latex composition. In this case, preferred fatty acid salts are sodium rosinate and potassium rosinate, and preferred alkylbenzene sulfonates are sodium dodecylbenzenesulfonate and potassium dodecylbenzenesulfonate. One of these surfactants may be used alone, or two or more of them may be used in combination.

The above use of a combination of at least one selected from the group consisting of alkylbenzene sulfonates, alkyl sulfosuccinates, alkyl sulfate ester salts, and polyoxyethylene alkyl ether sulfate ester salts and a fatty acid salt provides a latex containing the at least one selected from the group consisting of alkylbenzene sulfonates, alkyl sulfosuccinates, alkyl sulfate ester salts, and polyoxyethylene alkyl ether sulfate ester salts, and the fatty acid salt.

Further, in the aforementioned production method (1), a surfactant other than anionic surfactants may be used in combination, and examples of surfactants other than anionic surfactants include copolymerizable surfactants such as sulfoesters of α,β-unsaturated carboxylic acids, sulfate esters of α,β-unsaturated carboxylic acids, and sulfoalkyl aryl ethers.

The amount of the anionic surfactant used in the aforementioned production method (1) is preferably 0.1 to 50 parts by weight, more preferably 0.5 to 30 parts by weight with respect to 100 parts by weight of the synthetic polyisoprene. When two or more surfactants are used, the total amount thereof is preferably adjusted within the above ranges. Specifically, for example, when a combination of at least one selected from the group consisting of alkylbenzene sulfonates, alkyl sulfosuccinates, alkyl sulfate ester salts, and polyoxyethylene alkyl ether sulfate ester salts and a fatty acid salt is used, the total amount of the surfactants used preferably falls within the above ranges.

When a combination of at least one selected from the group consisting of alkylbenzene sulfonates, alkyl sulfosuccinates, alkyl sulfate ester salts, and polyoxyethylene alkyl ether sulfate ester salts and a fatty acid salt is used as an anionic surfactant, the ratio "fatty acid salt":"total of at least one selected from the group consisting of alkylbenzene sulfonates, alkyl sulfosuccinates, alkyl sulfate ester salts, and polyoxyethylene alkyl ether sulfate ester salts" on a weight basis is in the range of preferably 1:1 to 10:1, more preferably 1:1 to 7:1.

The amount of water used in the aforementioned production method (1) is preferably 10 to 1,000 parts by weight, more preferably 30 to 500 parts by weight, most preferably 50 to 100 parts by weight with respect to 100 parts by weight of the organic solvent solution of the synthetic polyisoprene. Examples of the type of water used include hard water, soft water, deionized water, distilled water, zeolite water, and the like. Preferred are soft water, deionized water, and distilled water.

To emulsify the solution or microsuspension of the synthetic polyisoprene dissolved or finely dispersed in the organic solvent, in water in the presence of the emulsifier, any apparatus commercially available as an emulsifying machine or a dispersing machine can be used without limitation. The anionic surfactant can be added to the solution or microsuspension of the synthetic polyisoprene by any manner without limitation, and the anionic surfactant may be added in advance to either or both of water and the organic solvent solution or microsuspension of the synthetic polyisoprene, or may be added all at once or in portions to the liquid to be emulsified during the emulsification process.

Examples of emulsifying machines include batch emulsifying machines such as "Homogenizer" (trade name, available from IKA Works), "POLYTRON" (trade name, available from Kinematica AG), and "TK AUTO-HOMO MIXER" (trade name, available from Tokushu Kika Kogyo Co., Ltd.); continuous emulsifying machines such as "TK PIPELINE-HOMO MIXER" (trade name, available from Tokushu Kika Kogyo Co., Ltd.), "Colloid mill" (trade name, available from Shinko Pantec Co., Ltd.), "SLASHER" (trade name, available from NIPPON COKE & ENGINEERING CO., LTD.), "Trigonal wet grinder" (trade name, available from Mitsui Miike Chemical Engineering Machinery, Co., Ltd.), "CAVITRON" (trade name, available from Eurotec, Ltd.), "MILDER" (trade name, available from Pacific Machinery & Engineering Co., Ltd.), and "FINE FLOW MILL" (trade name, available from Pacific Machinery & Engineering Co., Ltd.); high-pressure emulsifying machines such as "Microfluidizer" (trade name, available from MIZUHO INDUSTRIAL CO., LTD.), "NANOMIZER" (trade name, available from NANOMIZER Inc.), and "APV GAULIN" (trade name, available from Manton-Gaulin Company); membrane emulsifying machines such as "Membrane emulsifying machine" (trade name, available from REICA Co., Ltd.); vibratory emulsifying machines such as "VIBROMIXER" (trade name, available from REICA Co., Ltd.); ultrasonic emulsifying machines such as "Ultrasonic homogenizer" (trade name, available from Branson Ultrasonics Corporation); and the like. The conditions for the emulsification process using such an emulsifying machine are not particularly limited, and the treatment temperature, the treatment time, and the like may be appropriately selected to ensure a desired dispersion state.

In the aforementioned production method (1), the organic solvent is preferably removed from the emulsion prepared through the emulsification process. Preferred methods for removing the organic solvent from the emulsion are methods with which the amount of the organic solvent (preferably alicyclic hydrocarbon solvent) in the resulting synthetic polyisoprene latex can be reduced to 500 ppm by weight or less. For example, methods such as vacuum distillation, normal pressure distillation, water vapor distillation, and centrifugation can be employed.

Further, in order to increase the solids content of the synthetic polyisoprene latex, a concentration process by vacuum distillation, normal pressure distillation, centrifugation, membrane concentration, or the like may be performed as needed after removal of the organic solvent. In particular, centrifugation is preferably performed because it can increase the solids content of the synthetic polyisoprene latex and reduce the amount of residual surfactant in the synthetic polyisoprene latex.

The centrifugation is preferably performed, for example, using a continuous centrifuge under the conditions in which the centrifugal force is preferably 100 to 10,000 G, the solids content of the synthetic polyisoprene latex before centrifugation is preferably 2 to 15 wt%, the feed flow rate into the centrifuge is preferably 500 to 1700 Kg/hr, and the back pressure (gauge pressure) of the centrifuge is preferably 0.03 to 1.6 MPa. The synthetic polyisoprene latex can be obtained as a light liquid after the centrifugation. This process reduces the amount of residual surfactant in the synthetic polyisoprene latex.

The solids content of the synthetic polyisoprene latex is preferably 30 to 70 wt%, more preferably 40 to 70 wt%. Adjusting the solids content within the above ranges leads to appropriate viscosity of the latex to ensure ease of handling.

The volume average particle size of the synthetic polyisoprene latex is preferably 0.1 to 10 μm, more preferably 0.5 to 3 μm, further more preferably 0.5 to 2.0 um. Adjusting the volume average particle size within the above ranges leads to appropriate viscosity of the latex to ensure ease of handling, and can suppress formation of a film on the surface of the latex during storage of the synthetic polyisoprene latex.

Further, the synthetic polyisoprene latex may contain additives typically used in the field of latex, such as a pH adjuster, a defoamer, a preservative, a cross-linking agent, a chelating agent, an oxygen scavenger, and a dispersant. Examples of pH adjusters include alkali metal hydroxides such as sodium hydroxide and potassium hydroxide; alkali metal carbonates such as sodium carbonate and potassium carbonate; alkali metal hydrogen carbonates such as sodium hydrogen carbonate; ammonia; organic amine compounds such as trimethylamine and triethanolamine; and the like. Among these, preferred are alkali metal hydroxides and ammonia.

As described above, the conjugated diene polymer may be a styrene-isoprene-styrene block copolymer (SIS). In the term SIS, "S" represents a styrene block, and "I" represents an isoprene block.

The SIS can be prepared by a conventionally known method such as block copolymerization of isoprene and styrene in an inert polymerization solvent using an active organic metal such as n-butyl lithium as an initiator. Although the resulting polymer solution of SIS may be used as it is to produce an SIS latex, solid SIS may be extracted from the polymer solution and be dissolved in an organic solvent to prepare a solution, which is then used to produce an SIS latex. Any method for producing the SIS latex can be used without limitation, but preferred is a method for producing the SIS latex by emulsifying a solution or microsuspension of SIS, which is dissolved or finely dispersed in an organic solvent, in water in the presence of a surfactant and removing the organic solvent as required. In this case, impurities including residual polymerization catalyst in the polymer solution after synthesis may be removed. During or after polymerization, an antioxidant (described later) may be added to the solution. Alternatively, commercially available solid SIS may be used.

Examples of usable organic solvents include the same solvents as those listed for the synthetic polyisoprene. Preferred are aromatic hydrocarbon solvents and alicyclic hydrocarbon solvents, and particularly preferred is cyclohexane and toluene. The amount of the organic solvent used is typically 50 to 2,000 parts by weight, preferably 80 to 1,000 parts by weight, more preferably 100 to 500 parts by weight, further more preferably 150 to 300 parts by weight with respect to 100 parts by weight of the SIS.

Examples of surfactants include the same surfactants as those listed for the synthetic polyisoprene. Preferred are anionic surfactants, and particularly preferred are sodium rosinate and sodium dodecylbenzenesulfonate.

The amount of the surfactant used is preferably 0.1 to 50 parts by weight, more preferably 0.5 to 30 parts by weight with respect to 100 parts by weight of the SIS.

The amount of water used in the aforementioned method for producing the SIS latex is preferably 10 to 1,000 parts by weight, more preferably 30 to 500 parts by weight, most preferably 50 to 100 with respect to 100 parts by weight of the organic solvent solution of the SIS. Examples of the type of water used include hard water, soft water, deionized water, distilled water, zeolite water, and the like. Further, any of polar solvents typified by alcohols such as methanol may be used in combination with water.

Examples of methods of adding the monomers include the same methods as described above for the synthetic polyisoprene. Further, examples of apparatuses for emulsifying the organic solvent solution or microsuspension of the SIS in water in the presence of the surfactant include the same apparatuses as described above for the synthetic polyisoprene. The surfactant can be added in any manner without limitation, and the surfactant may be added in advance to either or both of water and the organic solvent solution or microsuspension of the SIS, or may be added all at once or in portions to the liquid to be emulsified during the emulsification process.

In the aforementioned method for producing the SIS latex, the SIS latex is preferably obtained by removing the organic solvent from the emulsion obtained by the emulsification process. The organic solvent can be removed from the emulsion by any method without limitation, and methods such as vacuum distillation, normal pressure distillation, water vapor distillation, and centrifugation can be employed.

Further, in order to increase the solids content of the SIS latex, a concentration process by vacuum distillation, normal pressure distillation, centrifugation, membrane concentration, or the like may be performed as needed after removal of the organic solvent.

The solids content of the SIS latex is preferably 30 to 70 wt%, more preferably 50 to 70 wt%. Adjusting the solids content within the above ranges leads to appropriate viscosity of the latex to ensure ease of handling.

Further, the SIS latex may contain additives that are generally used in the field of latex, such as a pH adjuster, a defoamer, a preservative, a cross-linking agent, a chelating agent, an oxygen scavenger, a dispersant, and an antioxidant. Examples of pH adjusters include the same pH adjusters as those described above for the synthetic polyisoprene. Preferred are alkali metal hydroxides and ammonia.

The content of styrene units in styrene blocks of the SIS contained in the SIS latex thus obtained is preferably 70 to 100 wt%, more preferably 90 to 100 wt%, further more preferably 100 wt% with respect to the total monomer units. Further, the content of isoprene units in isoprene blocks of the SIS is preferably 70 to 100 wt%, more preferably 90 to 100 wt%, further more preferably 100 wt% with respect to the total monomer units.

The content ratio of styrene units to isoprene units in the SIS is typically in the range of 1:99 to 90:10, preferably 3:97 to 70:30, more preferably 5:95 to 50:50, further more preferably 10:90 to 30:70 as a weight ratio of "styrene units:isoprene units".

The weight average molecular weight of the SIS is preferably 10,000 to 1,000,000, more preferably 50,000 to 500,000, further more preferably 100,000 to 300,000 as calibrated against polystyrene standards by gel permeation chromatography. Adjusting the weight average molecular weight of the SIS within the above ranges tends to facilitate the production of the SIS latex.

The volume average particle size of latex particles (SIS particles) in the SIS latex is preferably 0.1 to 10 $\mu$m, more preferably 0.5 to 3 $\mu$m, further more preferably 0.5 to 2.0 $\mu$m. Adjusting the volume average particle size of the latex particles within the above ranges leads to appropriate viscosity of the latex to ensure ease of handling, and can suppress formation of a film on the surface of the latex during storage of the SIS latex.

Further, the conjugated diene polymer can also be a natural rubber as described above. As a natural rubber latex, a latex obtained from a natural rubber tree and a latex obtained by treating the latex can be used. For example, a field latex collected from a natural rubber tree, a commercially available natural rubber latex formed by treating a field latex with ammonia or the like, and the like can be used.

The conjugated diene polymer can be a protein-free natural rubber. The protein-free natural rubber is free of proteins that cause immediate (Type I) allergic reactions, and therefore the resulting molded film can be suitably used in applications in contact with the human body, such as teats, balloons, gloves, balloons, and stalls. Any method for obtaining a protein-free natural rubber latex can be used without limitation, but the protein-free natural rubber latex can be obtained by reacting the natural rubber latex with a urea compound in the presence of a surfactant to modify proteins contained in the natural rubber, thereafter treating the natural rubber latex containing such modified proteins by a process such as centrifugation, coagulation of a rubber component, and ultrafiltration to separate the modified proteins from the natural rubber, and then removing the modified proteins.

Although the conjugated diene polymer may be a synthetic polyisoprene, a styrene-isoprene-styrene block copolymer (SIS), a natural rubber (a protein-free natural rubber), or the like as described above, the conjugated diene polymer is not limited to these examples, and a nitrile group-containing conjugated diene copolymer, a butadiene polymer, a styrene-butadiene copolymer, or the like may be used.

The conjugated diene polymer is preferably a carboxy-modified conjugated diene polymer that is carboxy-modified, since a decrease in mechanical strength when the molded film according to the present invention is stored at a high temperature can be further suppressed. The carboxy-modified conjugated diene polymer can be obtained by modifying the conjugated diene polymer described above with a monomer having a carboxyl group.

Any method can be used without limitation to modify the conjugated diene polymer with the monomer having a carboxyl group. Examples thereof include graft-polymerizing the monomer having a carboxyl group onto the conjugated diene polymer in an aqueous phase. Any method can be used without limitation to the graft-polymerization of the monomer having a carboxyl group onto the conjugated diene polymer in an aqueous phase, and a conventionally known method can be used. One preferred example is a method of adding the monomer having a carboxyl group and an organic peroxide to the conjugated diene polymer latex, and thereafter reacting the monomer having a carboxyl group with the conjugated diene polymer in an aqueous phase.

Examples of the organic peroxide include, but are not limited to, diisopropylbenzene hydroperoxide, cumene hydroperoxide, t-butyl hydroperoxide, 1,1,3,3-tetramethylbutyl hydroperoxide, di-t-butyl peroxide, isobutyryl peroxide, benzoyl peroxide, and the like. From the viewpoint of increasing the mechanical strength of the resulting molded film, 1,1,3,3-tetramethylbutyl hydroperoxide is particularly preferable. One of these organic peroxides may be used alone, or two or more of them may be used in combination.

The amount of the organic peroxide added is not particularly limited, and is preferably 0.01 to 3 parts by weight, more preferably 0.1 to 1 parts by weight with respect to 100 parts by weight of the conjugated diene polymer contained in the conjugated diene polymer latex.

Further, the organic peroxide can be used in combination with a reductant as a redox polymerization initiator. Examples of reductants include, but are not limited to, compounds containing reduced metal ions such as ferrous sulfate and cuprous naphthenate; sulfinates such as sodium hydroxymethanesulfinate; amine compounds such as dimethylaniline; and the like. One of these reductants may be used alone, or two or more of them may be used in combination.

The amount of the reductant added is not particularly limited, and is preferably 0.01 to 1 part by weight with respect to 1 part by weight of the organic peroxide.

Any method for adding the organic peroxide and the reductant can be used without limitation, and a known addition method such as one-time addition, portion-wise addition, and continuous addition can be used.

Although the reaction temperature during the reaction of the monomer having a carboxyl group with the conjugated diene polymer is not particularly limited, it is preferably 15 to 80°C, more preferably 30 to 50°C. Although the reaction time for the reaction of the monomer having a carboxyl group with the conjugated diene polymer may be appropriately set according to the aforementioned reaction temperature, the reaction time is preferably 30 to 300 minutes, more preferably 60 to 120 minutes.

The solids content of the conjugated diene polymer latex before the reaction of the monomer having a carboxyl group with the conjugated diene polymer is not particularly limited, and is preferably 5 to 60 wt%, more preferably 10 to 40 wt%.

Examples of the monomer having a carboxyl group include ethylenically unsaturated monocarboxylic acid monomers such as acrylic acid and methacrylic acid; ethylenically unsaturated polyvalent carboxylic acid monomers such as itaconic acid, maleic acid, fumaric acid, and butene tricarboxylic acid; partial ester monomers of ethylenically unsaturated polyvalent carboxylic acids such as monobutyl fumarate, monobutyl maleate, and mono-2-hydroxypropyl maleate; polyvalent carboxylic acid anhydrides such as maleic anhydride and citraconic anhydride; and the like. Ethylenically unsaturated monocarboxylic acid monomers are preferable, and acrylic acid and methacrylic acid are particularly preferable because further remarkable effects of the carboxy modification are achieved. One of these monomers may be used alone, or two or more of them may be used in combination. It should be noted that the aforementioned carboxyl group is intended to encompass forms of salts with alkali metals, ammonia, and the like.

The amount of the monomer having a carboxyl group used is preferably 0.01 parts by weight to 100 parts by weight, more preferably 0.01 parts by weight to 40 parts by weight, further more preferably 0.5 parts by weight to 20 parts by weight with respect to 100 parts by weight of the conjugated diene polymer.

The monomer having a carboxyl group can be added to the conjugated diene polymer latex by any method without limitation, and any known addition method such as one-time addition, portion-wise addition, or continuous addition can be used.

The degree of modification of the carboxy-modified conjugated diene polymer with the monomer having a carboxyl group may be appropriately controlled according to the intended use of the conjugated diene polymer latex composition to be obtained, but is preferably 0.01 to 10 wt%, more preferably 0.2 to 5 wt%, further more preferably 0.3 to 3 wt%, particularly preferably 0.4 to 2 wt%. Adjusting the degree of modification with the monomer having a carboxyl group within the above ranges results in a conjugated diene polymer latex that has more appropriate viscosity and therefore is easy to transfer, and allows the molded film according to the present invention to have mechanical strength which is less likely to decrease when it is stored at a high temperature. The degree of modification is represented by the formula below.

$$\text{Degree of modification (wt\%)} = (X/Y) \times 100$$

In the above formula, X represents the weight of units of the monomer having a carboxyl group in the carboxy-modified conjugated diene polymer, and Y represents the weight of the carboxy-modified conjugated diene polymer. X can be determined, for example, by performing $^1$H-NMR analysis on the carboxy-modified conjugated diene polymer and performing a calculation based on the results of the $^1$H-NMR analysis, or determining its acid content by neutralization titration and performing a calculation based on the resulting acid content.

Examples of polymerization catalysts used for graft polymerization (graft polymerization catalysts) include, but are not limited to, inorganic peroxides such as sodium persulfate, potassium persulfate, ammonium persulfate, potassium superphosphate, and hydrogen peroxide; organic peroxides such as diisopropylbenzene hydroperoxide, cumene hydroperoxide, t-butyl hydroperoxide, 1,1,3,3-tetramethylbutyl hydroperoxide, di-t-butyl peroxide, isobutyryl peroxide, and benzoyl peroxide; azo compounds such as 2,2'-azobisisobutyronitrile, azobis-2,4-dimethylvaleronitrile, and methyl azobisisobutyrate, and the like. Preferred are organic peroxides, and particularly preferred is 1,1,3,3-tetramethylbutyl hydroperoxide.

One of the aforementioned graft polymerization catalysts can be used alone, or two or more of them can be used in combination. Although the amount of the graft polymerization catalyst used varies depending on its type, the amount is preferably 0.1 to 10 parts by weight, more preferably 0.2 to 5 parts by weight with respect to 100 parts by weight of the conjugated diene polymer. Further, the graft polymerization catalyst can be added by any method without limitation, and any known addition method such as one-time addition, portion-wise addition, or continuous addition can be used.

The conjugated diene polymer (including the carboxy-modified conjugated diene polymer) used in the present invention has a swell index (SI) of preferably 105 to 300%, more preferably 110 to 250, further more preferably 120 to 200%. Adjusting the swell index (SI) within the above ranges allows the molded film according to the present invention to have mechanical strength which is less likely to decrease when it is stored at a high temperature, and also allows the molded film according to the present invention to have enhanced tensile strength and tear strength at normal temperature.

The swell index (SI) can be determined by forming the conjugated diene polymer latex into a film form, immersing the resulting film of the conjugated diene polymer in toluene at 25°C for one hour, measuring the width of the film before and after the immersion in toluene, and measuring the linear swelling ratio. Specifically, the swell index (SI) can be determined according to the formula below.

$$\text{Swell index (SI) [\%]} = [\{(\text{width of film after immersion in}$$
$$\text{toluene}) - (\text{width of film before immersion in toluene})\}]/(\text{width of film}$$
$$\text{before immersion in toluene})] \times 100$$

One example of the method of producing a film for the measurement to determine the swell index (SI) of the conjugated diene polymer latex can be, for example, the dip method below.

Specifically, in the dip method, an acid or an alkali is added to the conjugated diene polymer latex to adjust the pH to 8.2. And then, a ceramic mold having a ground surface is provided and washed, followed by preheating in an oven at 70°C for 30 minutes. Thereafter, the ceramic mold preheated is immersed in a coagulant aqueous solution containing 18 wt% of calcium nitrate and 0.05 wt% of polyoxyethylene lauryl ether (product name "EMULGEN 109P", manufactured by Kao Corporation) for 5 seconds. The ceramic mold is taken out from the coagulant aqueous solution, and then the ceramic mold coated with the coagulant is dried in an oven at 70°C for 20 minutes. Subsequently, the ceramic mold coated with the coagulant is taken out from the oven, and immersed in the conjugated diene polymer latex having a pH adjusted to 8.2 at 25°C for 10 seconds, and then taken out. After immersed in warm water at 60°C for 2 minutes, the ceramic mold coated with the conjugated diene polymer latex is dried at room temperature for 6 hours, resulting in the ceramic mold coated with a film for the measurement. After the ceramic mold is sprayed with talc, the film for the measurement is peeled from the ceramic mold to obtain the film for the measurement. The thickness of the film for the measurement is not particularly limited, and is preferably about 0.2 mm.

The swell index (SI) of the conjugated diene polymer latex within the above ranges can be adjusted by any method without limitation, and one example thereof is a method of adjusting the type and composition of the conjugated diene polymer. Among others, in the case where the conjugated diene polymer used is a carboxy-modified conjugated diene polymer, examples of the method of adjusting the swell index (SI) of the conjugated diene polymer latex include a method of adjusting the reaction temperature (modification reaction temperature) and the reaction time (modification reaction time) of the reaction of the monomer having a carboxyl group with the conjugated diene polymer; a method of selecting whether or not the latex after the reaction is post-heated; a method of adjusting the post-heating temperature and the post-heating time of post-heating the latex after the reaction; a method of selecting the type and the amount to be used of the monomer having a carboxyl group used in the modification reaction; a method of adjusting the type and the amount to be used of the reductant used in combination with the organic peroxide in the modification reaction; and the like. Adjustment is desirably performed by appropriately combining these methods.

The conjugated diene polymer (including the carboxy-modified conjugated diene polymer) latex used in the present invention may contain additives that are generally used in the field of latex, such as a pH adjuster, a defoamer, a preservative, a chelating agent, an oxygen scavenger, and a dispersant.

Examples of pH adjusters include alkali metal hydroxides such as sodium hydroxide and potassium hydroxide; alkali metal carbonates such as sodium carbonate and potassium carbonate; alkali metal hydrogen carbonates such as sodium hydrogen carbonate; ammonia; organic amine compounds such as trimethylamine and triethanolamine; and the like. Preferred are alkali metal hydroxides and ammonia.

The solids content of the conjugated diene polymer (which may be a carboxy-modified conjugated diene polymer) latex used in the present invention is preferably 30 to 70 wt%, more preferably 40 to 70 wt%. Adjusting the solids content within the above ranges is more effective in suppressing the occurrence of aggregates in the latex, and is more effective in suppressing separation of polymer particles during storage of the latex.

The latex composition used in the present invention contains a sulfur-based vulcanizing agent.

Examples of the sulfur-based vulcanizing agent include, but are not limited to, sulfur such as powder sulfur, flowers of sulfur, precipitated sulfur, colloid sulfur, surface-treated sulfur, and insoluble sulfur; sulfur-containing compounds such as sulfur chloride, sulfur dichloride, morpholine disulfide, alkyl phenol disulfides, caprolactam disulfide (N,N'-dithio-bis(hexahydro-2H-azepinone-2)), phosphorus-containing polysulfides, polymer polysulfides, and 2-(4'-morpholinodithio)benzothiazole; and the like. Among these, sulfur can be preferably used. One of these sulfur-based vulcanizing agents may be used alone, or two or more of them may be used in combination.

Although the amount of the sulfur-based vulcanizing agent used is not particularly limited, it is preferably 0.01 to 3 parts by weight, more preferably 0.1 to 1.2 parts by weight, further more preferably 0.1 to 0.8 parts by weight, still further more preferably 0.1 to 0.6 parts by weight, particularly preferably 0.2 to 0.6 parts by weight with respect to 100 parts by weight of the carboxy-modified conjugated diene polymer contained in the latex composition. Adjusting the content of the sulfur-based vulcanizing agent within the above ranges can result in a dip-molded article which can avoid delayed (Type IV) allergic reactions while having enhanced tensile strength and tear strength at normal temperature.

The latex composition used in the present invention contains a vulcanization accelerator. As the vulcanization accelerator, a xanthogen compound is preferably used from the viewpoint of producing a dip-molded article which can suitably avoid delayed (Type IV) allergic reactions.

Although the xanthogen compound is not specifically limited, examples thereof include xanthic acids, xanthates, xanthogen disulfides (compounds with two xanthic acid molecules bound via a sulfur atom or the like), xanthogen polysulfides (compounds with three or more xanthic acid molecules bound via sulfur atoms or the like), and the like.

Such xanthates are not specifically limited, and may be any compounds having a xanthate structure. Examples thereof include compounds represented by the general formula (ROC(=S)S)x-Z (where R represents a linear or branched hydrocarbon, Z represents a metal atom, and x represents a numerical value that matches the valence of Z and is generally 1 to 4, preferably 2 to 4, particularly preferably 2).

Although xanthates represented by the general formula (ROC(=S)S)x-Z are not specifically limited, examples thereof include zinc dimethyl xanthate, zinc diethyl xanthate, zinc dipropyl xanthate, zinc diisopropyl xanthate, zinc dibutyl xanthate, zinc dipentyl xanthate, zinc dihexyl xanthate, zinc diheptyl xanthate, zinc dioctyl xanthate, zinc di(2-ethylhexyl) xanthate, zinc didecyl xanthate, zinc didodecyl xanthate, potassium dimethyl xanthate, potassium ethyl xanthate, potassium propyl xanthate, potassium isopropyl xanthate, potassium butyl xanthate, potassium pentyl xanthate, potassium hexyl xanthate, potassium heptyl xanthate, potassium octyl xanthate, potassium 2-ethylhexyl xanthate, potassium decyl xanthate, potassium dodecyl xanthate, sodium methyl xanthate, sodium ethyl xanthate, sodium propyl xanthate, sodium isopropyl xanthate, sodium butyl xanthate, sodium pentyl xanthate, sodium hexyl xanthate, sodium heptyl xanthate, sodium octyl xanthate, sodium 2-ethylhexyl xanthate, sodium decyl xanthate, sodium dodecyl xanthate, and the like. Among these, xanthates with x in the general formula (ROC(=S)S)x-Z being 2 or more are preferable, isopropyl xanthates and butyl xanthates are more preferable, and zinc diisopropyl xanthate and zinc dibutyl xanthate are particularly preferable. One of these xanthates may be used alone, or two or more of them may be used in combination.

Xanthogen disulfides are compounds with two xanthic acid molecules bound via sulfur atoms or the like. Examples thereof include, but are not specifically limited to, dimethyl xanthogen disulfide, diethyl xanthogen disulfide, diisopropyl xanthogen disulfide, dibutyl xanthogen disulfide, dimethyl xanthogen polysulfide, diethyl xanthogen polysulfide, diisopropyl xanthogen polysulfide, dibutyl xanthogen polysulfide, and the like. Among these, diisopropyl xanthogen disulfide and dibutyl xanthogen disulfide are preferable.

Xanthogen polysulfides are compounds with three or more xanthic acid molecules bound via sulfur atoms or the like, and examples thereof include xanthogen trisulfides with three xanthic acid molecules bound via sulfur, xanthogen tetrasulfides with four xanthic acid molecules bound via sulfur, xanthogen pentasulfides with five xanthic acid molecules bound via sulfur, and the like.

Although the latex composition may contain one of these xanthogen compounds alone, the latex composition preferably contains a combination of two or more of them. For example, in the case where the latex composition contains a xanthic acid, the latex composition may contain two or more xanthogen compounds as a result of conversion of a portion of the xanthic acid to a salt form. Alternatively, a portion of the xanthic acid mixed in the latex composition may be present in the form of a xanthogen disulfide or a xanthogen polysulfide due to the action of the sulfur-based vulcanizing agent mixed in the latex composition. Likewise, also in the case where the latex composition contains a xanthate, a xanthogen disulfide, or a xanthogen polysulfide, these each may be present in the form of any one of a xanthic acid, a xanthate, a xanthogen disulfide, and a xanthogen polysulfide.

Further, in the present invention, a vulcanization accelerator other than xanthogen compounds may be used in place of the xanthogen compound or together with the xanthogen compound.

As such vulcanization accelerators other than xanthogen compounds, vulcanization accelerators conventionally used in dip molding can be used. Examples thereof include dithiocarbamic acid compounds, such as diethyldithiocarbamic acid, dibutyldithiocarbamic acid, di-2-ethylhexyldithiocarbamic acid, dicyclohexyldithiocarbamic acid, diphenyldithiocarbamic acid, and dibenzyldithiocarbamic acid, and zinc salts thereof; 2-mercaptobenzothiazole, zinc 2-mercaptobenzothiazole, 2-mercaptothiazoline, dibenzothiazyl disulfide, 2-(2,4-dinitrophenylthio)benzothiazole, 2-(N,N-diethylthiocarbaylthio)benzothiazole, 2-(2,6-dimethyl-4-morpholinothio)benzothiazole, 2-(4'-morpholinodithio)benzothiazole, 4-morpholinyl-2-benzothiazyl disulfide, 1,3-bis(2-benzothiazyl mercaptomethyl)urea, and the like. One of these vulcanization accelerators may be used alone, or two or more of them may be used in combination.

The content of the vulcanization accelerator (in the case where multiple vulcanization accelerators are present, the total content thereof) in the latex composition is preferably 0.01 to 10 parts by weight, more preferably 0.1 to 7 parts by weight, further more preferably 0.5 to 5 parts by weight with respect to 100 parts by weight of the conjugated diene polymer contained in the latex composition. Adjusting the content of the vulcanization accelerator within the above ranges allows the molded film according to the present invention to have mechanical strength which is less likely to decrease when it is stored at a high temperature, and also allows the molded film according to the present invention to have enhanced tensile strength and tear strength at normal temperature.

In the case where the latex composition used in the present invention contains the xanthogen compound as the vulcanization accelerator, the latex composition used in the present invention may further contain an activating agent.

In the case where the molded film obtained from the latex composition comprising the activating agent is cross-linked, the activating agent as well as the xanthogen compound described above acts as a vulcanization accelerator, allowing the cross-linked molded film to have tear strength which is less likely to decrease when it is stored at a high temperature, and also allowing the cross-linked molded film to have enhanced tear strength at normal temperature.

Although such an activating agent is not particularly limited, a metal compound is preferably used to further enhance the tear strength of the molded film. Examples of such metal compounds include, but are not limited to, metal oxides, metal compounds having one or more carbon atoms, and the like. Any metal may be selected as a metal component of such metal compounds without limitation. Preferred is a typical metal (at least one element selected from the group consisting of the elements of Groups 1, 2, 12, 13, 14, 15, 16, 17, and 18). More preferred are the elements of Groups 2, 12, 13, and 14, further more preferred are zinc, magnesium, calcium, aluminum, and lead, particularly preferred are zinc, magnesium, and calcium, and most preferred is zinc. One of these metal compounds may be used alone, or two or more of them may be used in combination.

Although metal oxides are not particularly limited, zinc oxide, magnesium oxide, titanium oxide, calcium oxide, lead oxide, iron oxide, copper oxide, tin oxide, nickel oxide, chromium oxide, cobalt oxide, and aluminum oxide are preferred from the viewpoint of providing a dip-molded article having further enhanced tear strength. More preferred is zinc oxide.

Preferred metal compounds having one or more carbon atoms are carbonates, hydrogen carbonates, hydroxides, and organic metal compounds from the viewpoint of providing a dip-molded article having further enhanced tear strength. More preferred are carbonates, hydrogen carbonates, and organic metal compounds. Among these, inorganic salts such as carbonates and hydrogen carbonates are particularly preferred from the viewpoint of high stability and high availability of the compounds.

The content of the activating agent in the latex composition is preferably 0.01 to 10 parts by weight, more preferably 0.1 to 5 parts by weight, further more preferably 1 to 3 parts by weight with respect to 100 parts by weight of the conjugated diene polymer contained in the latex composition. Adjusting the content of the activating agent within the above ranges allows the molded film according to the present invention to have tear strength which is less likely to decrease when it is stored at a high temperature, and also allows the molded film according to the present invention have enhanced tear strength at normal temperature.

The activating agent can be added in any manner without limitation as long as the conjugated diene polymer latex and the activating agent are finally mixed.

The latex composition used in the present invention contains an antioxidant which is at least one selected from phenolic antioxidants and quinoline antioxidants, and has a molecular weight of 300 to 600 (hereinafter sometimes referred to as "specific antioxidant").

In the present specification, the "phenolic antioxidant" refers to an aromatic compound having one or more phenolic hydroxyl groups (hydroxyl groups directly bound to a benzene ring structure in the aromatic compound).

Preferred phenolic antioxidants as the specific antioxidant are aromatic compounds having a hindered phenol structure. In the present specification, the "hindered phenol structure" refers to a structure which has a substitution with a hydrocarbon group having 4 or more carbons at one of the two ortho positions of a phenolic hydroxyl group, and has a substitution with a substituent other than a hydrogen atom at the other position. The above-described hydrocarbon group having 4 or more carbons which is located at the one of the ortho positions of a phenolic hydroxyl group may have a substituent. The aromatic compound having a hindered phenol structure is preferably an aromatic compound having a structure which has a substitution with a tert-butyl group at one of the two ortho positions of a phenolic hydroxyl group, and has a substitution with a substituent other than a hydrogen atom at the other position.

Although it is only required that the phenolic antioxidants as the specific antioxidant have at least one phenolic hydroxyl group and have a molecular weight in the range of 300 to 600, the antioxidants, for example, can be classified as aromatic compounds (a) having two or more phenolic hydroxyl groups and aromatic compounds (b) having one phenolic hydroxyl group in the present invention. In the present specification, the "compound having two or more phenolic hydroxyl groups" is intended to encompass compounds having one or more benzene ring structures to each of which two or more phenolic hydroxyl groups are bound, and compounds having two or more benzene ring structures to each of which one or more phenolic hydroxyl groups are bound. In other words, the two or more phenolic hydroxyl groups in the aromatic compounds (a) having two or more phenolic hydroxyl groups may be bound to the same benzene ring structure, or may be bound to different benzene rings.

Examples of the aromatic compounds (a) having two or more phenolic hydroxyl groups include 2,2'-methylenebis(4-methyl-6-tertbutylphenol), 2,2'-methylenebis(4-ethyl-6-t-butylphenol), 4,4'-methylenebis(2,6-di-t-butylphenol), 2,2'-methylene-bis(6-α-methylbenzyl-p-cresol), 4,4'-butylidenebis(3-methyl-6-tert-butylphenol), 4,4'-thiobis(6-tert-butyl-o-cresol), 2,2'-thiobis-(4-methyl-6-t-butylphenol), 4,4'-thiobis(3-methyl-6-tert-butylphenol), bis[3-(3-t-butyl-4-hydroxy-5-methylphenyl)propionic acid] [ethylenebis(oxyethylene)], and the like. The molecular weight of the aromatic compounds (a) having two or more phenolic hydroxyl groups is preferably 310 to 590, more preferably 320 to 540, further more preferably 330 to 440.

A preferred aromatic compound (a) having two or more phenolic hydroxyl groups is an aromatic compound (a-1) having two or more hindered phenol structures because a decrease in mechanical strength when the film according to the present invention is stored at a high temperature can be further suppressed. Examples of such an aromatic compound (a-1) having two or more hindered phenol structures include 2,2'-methylenebis(4-methyl-6-tert-butylphenol), 2,2'-methylenebis(4-ethyl-6-t-butylphenol), 4,4'-methylenebis(2,6-di-t-butylphenol), 2,2'-methylene-bis(6-$\alpha$-methyl-benzyl-p-cresol), 4,4'-thiobis (6-tert-butyl-o-cresol), 2,2'-thiobis-(4-methyl-6-t-butylphenol), bis[3-(3-t-butyl-4-hydroxy-5-methylphenyl)propionic acid] [ethylenebis(oxyethylene)], and the like.

The aromatic compound (a-1) having two or more hindered phenol structures is more preferably an aromatic compound (a-2) having a diphenylmethane skeleton having two or more hindered phenol structures, and having a molecular weight of 300 to 600. Examples of such an aromatic compound (a-2) having a diphenylmethane skeleton having two or more hindered phenol structures include 2,2'-methylenebis(4-methyl-6-tert-butylphenol), 2,2'-methylenebis(4-ethyl-6-t-butylphenol), 4,4'-methylenebis(2,6-di-t-butylphenol), 2,2'-methylene-bis(6-$\alpha$-methylbenzyl-p-cresol), and the like. Among the aromatic compounds (a-2) having a diphenylmethane skeleton having two or more hindered phenol structures, aromatic compounds (a-3) having hindered phenol structure in each of the two benzene rings forming a diphenylmethane skeleton are preferable. Among others, 4,4'-methylenebis(2,6-di-tert-butylphenol) and 2,2'-methylenebis(4-methyl-6-tert-butylphenol) are more preferable, and 2,2'-methylenebis(4-methyl-6-tert-butylphenol) is further more preferable.

Examples of the aromatic compounds (b) having one phenolic hydroxyl group include 2,6-di-t-butyl-4-(4,6-bis(octylthio)-1,3,5-triazine-2-ylamino)phenol, octadecyl-3-(3,5-di-t-butyl-4-hydroxyphenyl)propionate, octadecyl 3-(3,5-di-t-butyl-4-hydroxyphenyl)propionate, octyl-3,5-di-tert-butyl-4-hydroxyhydrocinnamic acid, 4,6-bis[(dodecylthio)methyl]-6-methylphenol, and the like. The molecular weight of the aromatic compounds (b) having one phenolic hydroxyl group is preferably 350 to 600, more preferably 400 to 600, further more preferably 450 to 600.

Preferred aromatic compounds (b) having one phenolic hydroxyl group are aromatic compounds (b-1) having one phenolic hydroxyl group and one or more -NH- bonds. The aromatic compounds (b-1) having one phenolic hydroxyl group and one or more -NH- bonds allow the resulting molded film to have excellent ozone degradation resistance. A preferred aromatic compound (b-1) having one phenolic hydroxyl group and one or more -NH- bonds is 2,6-di-t-butyl-4-(4,6-bis(octylthio)-1,3,5-triazine-2-ylamino)phenol.

The quinoline antioxidant is a heterocyclic aromatic compound having one or more quinoline structures (quinoline which may have a substituent), and having a molecular weight in the range of 300 to 600. One example of the quinoline antioxidant is a 2,2,4-trimethyl-1,2-dihydroquinoline polymer.

The specific antioxidant used in the present invention preferably contains at least a phenolic antioxidant, more preferably contains at least an aromatic compound (a) having two or more phenolic hydroxyl groups, further more preferably contains an aromatic compound (a) having two or more phenolic hydroxyl groups and an aromatic compound (b) having one phenolic hydroxyl group, especially preferably contains an aromatic compound (a) having two or more phenolic hydroxyl groups and an aromatic compound (b-1) having one phenolic hydroxyl group and one or more -NH-bonds, particularly preferably contains an aromatic compound (a-1) having two or more hindered phenol structures and an aromatic compound (b-1) having one phenolic hydroxyl group and one or more -NH-bonds, and most preferably contains an aromatic compound (a-2) having a diphenylmethane skeleton having two or more hindered phenol structures and an aromatic compound (b-1) having one phenolic hydroxyl group and one or more -NH- bonds.

In the case where the specific antioxidant used in the present invention contains an aromatic compound (a) having two or more phenolic hydroxyl groups and an aromatic compound (b) having one phenolic hydroxyl group, the content ratio of the aromatic compound (a) having two or more phenolic hydroxyl groups and the aromatic compound (b) having one phenolic hydroxyl group (aromatic compound (a) having two or more phenolic hydroxyl groups:aromatic compound (b) having one phenolic hydroxyl group) on a weight basis is preferably 1:99 to 99:1, more preferably 10:90 to 98:2, more preferably 25:75 to 95:5, particularly preferably 55:45 to 90:10.

The molecular weight of the specific antioxidant used in the present invention is not particularly limited as long as it falls within 300 to 600. Two or more specific antioxidants may be used in combination. In the case where the latex composition contains two or more specific antioxidants, the weight average molecular weight of the two or more specific antioxidants is used as the molecular weight of the specific antioxidant. Specifically, in the present invention, the weight average molecular weight of the specific antioxidant contained in the latex composition is 300 to 600. The molecular weight of the specific antioxidant used in the present invention is preferably 310 to 590, more preferably 320 to 540, further more preferably 330 to 440 since a decrease in mechanical strength when the molded film according to the present invention is stored at a high temperature can be further suppressed.

The content of the specific antioxidant in the latex composition is preferably 0.05 to 10 parts by weight, more preferably 0.1 to 5 parts by weight, further more preferably 0.5 parts by weight to 3 parts by weight with respect to 100 parts by weight of the conjugated diene polymer contained in the latex composition.

The latex composition used in the present invention may further contain an antioxidant other than the specific antioxidants described above, but preferably contains only the specific antioxidant described above.

The latex composition can further contain optional compounding agents including a dispersant; a reinforcer such as carbon black, silica, or talc; a filler such as calcium carbonate or clay; an ultraviolet absorber; and a plasticizer.

These compounding agents can be mixed in the latex composition by any method without limitation. Examples thereof include a method involving preparing a composition comprising the conjugated diene polymer latex, the sulfur-based vulcanizing agent, the vulcanization accelerator, and the specific antioxidant as described above, and then mixing the optional compounding agents in the prepared composition using a disperser such as a ball mill, a kneader, or a disperser, and the like. Some of the compounding agents may be added after aging (described later).

The solids content of the latex composition used in the present invention is preferably 1 to 40 wt%, more preferably 3 to 35 wt%, further more preferably 5 to 30 wt%, particularly preferably 10 to 20 wt%. Adjusting the solids content of the latex composition within the above ranges allows the resulting molded film to have mechanical strength which is less likely to decrease when it is stored at a high temperature even in the case where the molded film has a thickness of as thin as 20 to 300 $\mu$m, and to also have enhanced tensile strength and tear strength at normal temperature, while maintaining a high level of stability against aggregation of the latex.

The latex composition used in the present invention is preferably subjected to aging (pre-vulcanization) before being molded from the viewpoint of producing a molded film having sufficient mechanical properties. The time for aging (pre-vulcanization) is preferably 8 to 120 hours, more preferably 24 to 72 hours, although not particularly limited thereto. The temperature during aging (pre-vulcanization) is preferably 20 to 40°C, although not particularly limited thereto. After a predetermined time of aging (pre-vulcanization) before use, the aforementioned latex composition may be successively subjected to molding such as dip molding while the conditions for aging (pre-vulcanization) are maintained (the aging (pre-vulcanization) is continued). In this case, the aging (pre-vulcanization) time and the aging (pre-vulcanization) temperature may be controlled within the above ranges.

<Molded Film>

The molded film according to the present invention is a molded film having a thickness of 20 to 300 $\mu$m obtained by using the latex composition described above.

The thickness of the molded film according to the present invention is not particularly limited as long as it is 20 to 300 $\mu$m, but is preferably 50 to 280 $\mu$m, more preferably 100 to 260 $\mu$m, particularly preferably 140 to 250 $\mu$m. The thickness of the molded film can be determined by selecting five points for measurement in the molded film, and measuring the thicknesses of the five selected points to calculate the arithmetic average of the five measured points.

Although not particularly limited, the molded film according to the present invention is suitably a dip-molded article obtained by dip molding the latex composition described above. The dip molding is a method involving immersing a mold in the latex composition to deposit the composition on the surface of the mold, then pulling the mold out of the composition, and thereafter drying the composition deposited on the surface of the mold. The mold before the immersion in the latex composition may be preheated. Further, before the mold is immersed in the latex composition or after the mold is pulled out of the latex composition, a coagulant can be used as required.

Specific examples of how to use the coagulant include depositing the coagulant on the mold by immersing the mold in a coagulant solution before the immersion in the latex composition (anode coagulant dipping); immersing a mold on which the latex composition has been deposited in a coagulant solution (Teague coagulant dipping); and the like. The anode coagulant dipping is preferable in that a dip-molded article having less unevenness in thickness is obtained.

Specific examples of coagulants include water-soluble polyvalent metal salts including metal halides such as barium chloride, calcium chloride, magnesium chloride, zinc chloride, and aluminum chloride; nitrates such as barium nitrate, calcium nitrate, and zinc nitrate; acetates such as barium acetate, calcium acetate, and zinc acetate; and sulfates such as calcium sulfate, magnesium sulfate, and aluminum sulfate. Among these, calcium salts are preferable, and calcium nitrate is more preferable. One of these water-soluble polyvalent metal salts may be used alone, or two or more of them may be used in combination.

Such coagulants can be generally used as solutions in water, an alcohol, or a mixture thereof, and are preferably used in the form of aqueous solutions. Such aqueous solutions may further contain a water-soluble organic solvent such as methanol or ethanol, and a nonionic surfactant. Although the concentration of coagulant(s) varies depending on the type of the water-soluble polyvalent metal salt, the concentration is preferably 5 to 50 wt%, more preferably 10 to 30 wt%.

The mold after pulled out of the latex composition is generally heated to dry the deposit formed on the mold. The drying conditions may be appropriately selected.

The dip-molded layer obtained is preferably subjected to heat treatment for cross-linking.

Before the heat treatment, the dip-molded layer obtained may be immersed in water, preferably hot water at 30 to 70°C for about 1 to 60 minutes to remove water-soluble impurities (such as excess emulsifier and coagulant). Although the removal of water-soluble impurities may be performed after the heat treatment of the dip-molded layer, the removal process is preferably performed before the heat treatment to more efficiently remove the water-soluble impurities.

The dip-molded layer is cross-linked by heat treatment typically at a temperature of 80 to 150°C, preferably for 10 to 130 minutes. As a heating method, external heating methods using infrared rays or heated air or internal heating methods using high-frequency waves can be used. Among these, external heating using heated air is preferable.

Then, a dip-molded article is obtained as a molded film by detaching the dip-molded layer from the mold for dip molding. As a detaching method, a method of peeling the film from the mold for molding by hand or a method of peeling the film by water pressure or pressure of compressed air can be employed. After the detachment, heat treatment at a temperature of 60 to 120°C for 10 to 120 minutes may be further performed.

Besides dip molding of the latex composition described above, the molded film according to the present invention may be obtained by any method (such as coating method) which enables formation of the latex composition described above into a film.

The molded film according to the present invention has mechanical strength which is less likely to decrease when stored at a high temperature. Accordingly, the molded film according to the present invention can be suitably used as an article which is required to have mechanical properties such as tensile strength and tear strength, and can be stored at a high temperature of about 70°C or lower, or an article which can be stored at normal temperature for a long period of time. For example, the molded film according to the present invention can be particularly suitably used as a glove. In the case where the molded film is a glove, inorganic fine particles made of talc, calcium carbonate, or the like or organic fine particles such as starch particles may be spread on the surface of the glove, an elastomer layer containing fine particles may be formed on the surface of the glove, or the surface layer of the glove may be chlorinated in order to prevent the adhesion of contacting parts of the molded film and allow the glove to be put on and taken off more smoothly.

Further, other than the aforementioned glove, the molded film according to the present invention can be used as medical supplies such as baby bottle nipples, droppers, tubes, water pillows, balloon stalls, catheters, and condoms; toys such as balloons, dolls, and balls; industrial supplies such as pressure molding bags and gas storage bags; fingerstalls; and the like.

EXAMPLES

Hereinafter, the present invention will be specifically described with reference to Examples. However, the present invention is not limited to these examples. The "part(s)" below is on a weight basis unless otherwise specified. The physical properties were measured as follows.

<Solids Content>

From each sample, 2 g (weight: X2) was accurately weighed on an aluminum dish (weight: X1), followed by drying in a hot air dryer at 105°C for 2 hours. Subsequently, after cooling in a desiccator, the weight thereof (weight: X3) including the aluminum dish was measured to calculate the solids content according to the following calculation formula.

$$\text{Solids content (wt\%)} = (X3 - X1) \times 100/X2$$

<Degree of modification of carboxy-modified synthetic polyisoprene>

For carboxy-modified synthetic polyisoprene in a carboxy-modified synthetic polyisoprene latex, the number of carboxyl groups in the carboxy-modified synthetic polyisoprene was determined by neutralization titration using an aqueous sodium hydroxide solution. Then, the degree of modification with a monomer having a carboxyl group was determined using the formula below based on the determined number of carboxyl groups.

$$\text{Degree of modification (wt\%)} = (X/Y) \times 100$$

In the above formula, X represents the weight of units of the monomer having a carboxyl group in the carboxy-modified synthetic polyisoprene, and Y represents the weight of the carboxy-modified synthetic polyisoprene.

<Swell index (SI)>

Potassium hydroxide was added to a carboxy group-modified synthetic polyisoprene latex to adjust the pH to 8.2. And then, a ceramic mold having a ground surface was provided and washed, followed by preheating in an oven at 70°C for 60 minutes. Thereafter, the ceramic mold preheated was immersed in a coagulant aqueous solution containing 18 wt% of calcium nitrate and 0.05 wt% of polyoxyethylene lauryl ether (product name "EMULGEN 109P", manufactured by Kao Corporation) for 5 seconds. The ceramic mold was taken out from the coagulant aqueous solution, and then the ceramic mold coated with the coagulant was dried in an oven at 70°C for 20 minutes. Subsequently, the ceramic mold coated with the coagulant was taken out from the oven, and immersed in the carboxy group-modified synthetic polyisoprene latex having a pH adjusted to 8.2 at 25°C for 10 seconds, and then taken out. After immersed in warm water at 60°C for 2 minutes, the ceramic mold coated with the carboxy group-modified synthetic polyisoprene latex was dried at room temperature for 6 hours, resulting in the ceramic mold coated with a film for the measurement. After the ceramic mold was sprayed with talc, the resulting film was peeled from the ceramic mold to obtain the dip film having a thickness of 0.2 mm. After cutting a film to be tested having a diameter of 25 mm out of the obtained film, immersing the resulting film to be tested in toluene at 25°C for one hour, and measuring the width of the test piece before and after the immersion in toluene, the swell index (SI) was calculated according to the formula below.

```
Swell index (SI) [%] = [{(width of film after immersion in
toluene) - (width of film before immersion in toluene)}]/(width of film
before immersion in toluene)] × 100
```

<Thickness of dip-molded article>

Five points were selected for measurement in such a way that each point was within 3 cm from a location on a dip-molded article corresponding to a location which was in contact with the coagulant solution for the longest time (the top of a glass mold) when the glass mold was immersed in a coagulant solution. Then, the thickness at each of the five points selected was measured to determine the arithmetic average of the thickness at the five points measured. The value (unit: mm) obtained was defined as the thickness of the dip-molded article.

<Tensile strength of dip-molded article>

A dip-molded article (dip-molded article before being aged) was heated at 70°C for seven days to obtain a dip-molded article after being aged. In accordance with ASTM D412, each of the dip-molded article before being aged and the dip-molded article after being aged was punched out using a dumbbell (trade name "SUPER DUMBBELL (type: SDMK-100C)" available from DUMBBELL CO., LTD.) to produce a test piece for tensile strength measurement. The test piece was stretched at a stretching speed of 500 mm/min using a TENSILON Universal Material Testing Instrument (trade name "RTG-1210", available from ORIENTEC CORPORATION) to measure tensile strength immediately before break (unit: MPa) .

<Tear strength of dip-molded article>

A dip-molded article (dip-molded article before being aged) was heated at 70°C for seven days to obtain a dip-molded article after being aged. In accordance with ASTM D624-00, each of the dip-molded article before being aged and the dip-molded article after being aged was allowed to stand still in a constant-temperature, constant-humidity room at 23°C and at a relative humidity of 50% for 24 hours or more, and then was punched out using a dumbbell (trade name "Die C", available from DUMBBELL CO., LTD.) to prepare a test piece for tear strength measurement. The test piece was stretched at a stretching speed of 500 mm/min using a TENSILON Universal Material Testing Instrument (trade name "RTG-1210", available from A&D Company, Limited) to measure tear strength (unit: N/mm).

<Production Example 1>

(Production of carboxy-modified synthetic polyisoprene latex (A-1))

Synthetic polyisoprene (trade name "NIPOL IR2200L", available from Zeon Corporation) was mixed with n-hexane (boiling point: 69°C), and was dissolved therein by heating to 60°C with stirring to prepare an n-hexane solution (a) of the synthetic polyisoprene having a synthetic polyisoprene concentration of 15 wt%.
Meanwhile, potassium rosinate was added to water, and was dissolved therein by heating to 60°C. Thus, an emulsifier aqueous solution (b) (concentration: 1.5 wt%) was prepared.
Next, the n-hexane solution (a) of the synthetic polyisoprene prepared above and the emulsifier aqueous solution (b) were mixed using a mixer (trade name "Multi Line mixer MS26-MMR-5.5L", available from SATAKE CHEMICAL EQUIPMENT MFG., LTD.) in such proportions that the amount of potassium rosinate in the emulsifier aqueous solution (b) was 10 parts with respect to 100 parts of the synthetic polyisoprene in the n-hexane solution (a) of the synthetic polyisoprene. The mixture was then mixed and emulsified at a rotational speed of 4100 rpm using an emulsifying apparatus (trade name "MILDER MDN310", available from Pacific Machinery & Engineering Co., Ltd.) to give an emulsified dispersion (c). In this process, the total feed flow rate of the n-hexane solution (a) of the synthetic polyisoprene and the emulsifier aqueous solution (b) was controlled at 2,000 kg/hr, the temperature was controlled at 60°C, and the back pressure (gauge pressure) was controlled at 0.5 MPa.

Subsequently, the emulsified dispersion (c) was heated to 80°C under a reduced pressure of -0.01 to -0.09 MPa (gauge pressure) to distill off n-hexane and afford an aqueous dispersion (d) of the synthetic polyisoprene. In this process, a defoamer (trade name "SM5515", available from Dow Coming Toray Co., Ltd.) was continuously added by spraying the defoamer in an amount of 300 ppm by weight with respect to the synthetic polyisoprene in the emulsified dispersion (c). In the process of distilling off n-hexane, the emulsified dispersion (c) was adjusted to 70 vol% or less of the tank volume, and was gently stirred at 60 rpm using a three-bladed inclined paddle as a stirring blade.

After the completion of distilling off of n-hexane, the aqueous dispersion (d) of the synthetic polyisoprene obtained was concentrated by centrifugation at 8,000 to 9,000 G using a continuous centrifuge (trade name "SRG510", available from Alfa Laval AB) to give a synthetic polyisoprene latex (e) with a solids content of 60 wt% as a light liquid. The conditions for centrifugation were as follows: the solids content of the aqueous dispersion (d) before centrifugation was 8 wt%; the flow rate during continuous centrifugation was 1300 kg/hr; and the back pressure (gauge pressure) of the centrifuge was 0.1 MPa.

Subsequently, 130 parts of distilled water was added with respect to 100 parts of the synthetic polyisoprene in the resulting synthetic polyisoprene latex (e) to dilute the latex. A solution of 0.8 parts (with respect to 100 parts of the synthetic polyisoprene) of the sodium salt of a condensation product of β-naphthalene sulfonic acid and formalin (trade name "DEMOL T-45", available from Kao Corporation) as a dispersant diluted with 4 parts (with respect to 100 parts of the synthetic polyisoprene) of distilled water was added to the synthetic polyisoprene latex (e) over 5 minutes. Next, the synthetic polyisoprene latex (e) containing the dispersant was fed into a nitrogen-purged reactor provided with a stirrer, and was warmed to 30°C with stirring. In another reactor, a diluted solution of methacrylic acid was prepared by mixing 3 parts of methacrylic acid as a carboxyl group-containing compound and 16 parts of distilled water. The diluted solution of methacrylic acid was added over 30 minutes to the reactor controlled at 20°C.

Further, a solution (f) containing 7 parts of distilled water, 0.30 parts of sodium formaldehyde sulfoxylate (trade name "SFS", available from MITSUBISHI GAS CHEMICAL COMPANY, INC.), and 0.01 parts of ferrous sulfate (trade name "Frost Fe", available from CHUBU CHELEST CORPORATION) was prepared in another reactor. After the solution (f) was transferred to the former reactor, 0.5 parts of 1,1,3,3-tetramethylbutyl hydroperoxide (trade name "PEROCTA H", available from NOF CORPORATION) was added thereto and reacted at 30°C for one hour, thereby yielding a latex after the modification reaction. The resulting latex after the modification reaction was allowed to further react at 40°C for one hour, followed by concentration in a centrifuge to yield a carboxy-modified synthetic polyisoprene latex (A-1) having a solids content of 60 wt%. The resulting carboxy-modified synthetic polyisoprene latex (A-1) was measured for degree of modification in accordance with the method described above to give a degree of modification of 0.5 mol%. The resulting carboxy-modified synthetic polyisoprene latex (A-1) was measured for the swell index (SI) in accordance with the method described above. The swell index (SI) of the carboxy-modified synthetic polyisoprene contained in the carboxy-modified synthetic polyisoprene latex (A-1) was 125%. The results were shown in Table 1 as results of Examples 1 to 3 and 5 and Comparative Examples 1 to 4.

<Production Example 2>

(Production of carboxy-modified synthetic polyisoprene latex (A-2))

After the synthetic polyisoprene latex (e) was obtained in the same manner as in Production Example 1, the amount of 1,1,3,3-tetramethylbutyl hydroperoxide (trade name "PEROCTA H", available from NOF CORPORATION) used during the modification reaction with methacrylic acid was changed from 0.5 parts to 0.3 parts, and a latex after the modification reaction was obtained. After the resulting latex after the modification reaction was allowed to further react at 40°C for one hour, followed by concentration in a centrifuge to yield a carboxy-modified synthetic polyisoprene latex (A-2) having a solids content of 60 wt%. The resulting carboxy-modified synthetic polyisoprene latex (A-2) was measured for degree of modification in accordance with the method described above to give a degree of modification of 0.5 mol%. The resulting carboxy-modified synthetic polyisoprene latex (A-2) was measured for the swell index (SI) in accordance with the method described above. The swell index (SI) of the carboxy-modified synthetic polyisoprene contained in the carboxy-modified synthetic polyisoprene latex (A-2) was 180%. The results were shown in Table 1 as results of Example 4.

<Example 1>

(Preparation of aqueous dispersion of sulfur)

0.5 Parts of sulfur, 0.03 parts (6.0 parts with respect to 100 parts of sulfur) of the sodium salt of a condensation product of β-naphthalene sulfonic acid and formalin (trade name "DEMOL T-45", available from Kao Corporation) as an anionic surfactant, 0.004 parts of a 5% potassium hydroxide aqueous solution, and 0.42 parts of water were mixed by a ball mill (trade name "porcelain ball mill" available from NITTO KAGAKU CO., Ltd.) and crushed to yield an aqueous dispersion of sulfur. The mixing by the ball mill was performed using ceramic porcelain balls of φ10 mm to φ35 mm (a mixture of ceramic porcelain balls of φ10 mm, φ15 mm, φ20 mm, φ25 mm, φ30 mm, and φ35 mm) at 50 rpm for 72 hours.

(Preparation of aqueous dispersion of xanthogen compound)

2.5 Parts of zinc diisopropyl xanthate (trade name "NOCCELER ZIX", available from Ouchi Shinko Chemical Industrial Co., Ltd., volume average particle size: 14 μm, 95% volume cumulative diameter (D95): 55 um) as a xanthogen compound, 0.45 parts (18.0 parts with respect to 100 parts of zinc diisopropyl xanthate) of polyoxyethylene distyrenated phenyl ether (trade name "EMULGEN A-60", available from Kao Corporation) as an non-ionic surfactant, and 2.05 parts of water were mixed by a ball mill (trade name "porcelain ball mill" available from Nitto Kagaku Co., Ltd.) and crushed to yield an aqueous dispersion of the xanthogen compound. The mixing by the ball mill was performed using ceramic porcelain balls of φ10 mm to φ35 mm (a mixture of ceramic porcelain balls of φ10 mm, φ15 mm, φ20 mm, φ25 mm, φ30 mm, and φ35 mm) at 50 rpm for 72 hours.

(Preparation of latex composition)

The carboxy-modified synthetic polyisoprene latex (A-1) obtained above was injected with ion exchanged water with stirring to be controlled to have a solids content of 40 wt%. 0.5 Parts of the aqueous dispersion of sulfur prepared above on a sulfur basis, and 2.5 parts of the aqueous dispersion of xanthogen compound on a zinc diisopropyl xanthate basis were added with respect to 100 parts of the carboxy-modified synthetic polyisoprene in the carboxy-modified synthetic polyisoprene latex (A-1) having the solids content adjusted.

On a solids basis with respect to 100 parts of the carboxy-modified synthetic polyisoprene in the resulting mixture, 1.5 parts of zinc oxide as an activating agent, 1.5 parts of 2,2'-methylenebis(4-methyl-6-tert-butylphenol) (trade name "NOCRAC NS-6", available from Ouchi Shinko Chemical Industrial Co., Ltd., molecular weight: 340, an antioxidant which is an aromatic compound (a-3) having a hindered phenol structure in each of the two benzene rings forming a diphenylmethane skeleton), and 0.5 parts of 6-(4-hydroxy-3,5-di-tert-butylanilino)-2,4-bis(octylthio)-1,3,5-triazine (trade name "Irganox 565", available from BASF SE, molecular weight: 589, an antioxidant which is an aromatic compound (b-1) having one phenolic hydroxyl group and one or more -NH-bonds) were added as aqueous dispersions of the compounding agents to the stirred mixture. Subsequently, the mixture was aged (pre-vulcanized) for 48 hours in a temperature-constant water tank controlled at 25°C to provide a latex composition.

(Production of dip-molded article)

A commercially available ceramic hand mold (available from Shinko Ceramics Co., Ltd.) was washed, followed by preheating in an oven at 70°C. Thereafter, the hand mold was immersed in a coagulant aqueous solution containing 18 wt% of calcium nitrate and 0.05 wt% of polyoxyethylene lauryl ether (trade name "EMULGEN 109P", available from Kao Corporation) for 5 seconds, and was taken out of the coagulant aqueous solution. Subsequently, the hand mold was dried in an oven at 70°C for 30 minutes or more, thereby allowing the coagulant to deposit on the hand mold, so that the hand mold was coated with the coagulant.

Thereafter, the hand mold coated with the coagulant was taken out of the oven, and was immersed for 10 seconds in the latex composition aged for 48 hours obtained above. Subsequently, the hand mold was air-dried at room temperature for 10 minutes, and was immersed in hot water at 60°C for 5 minutes to elute water-soluble impurities, thereby forming a dip-molded layer on the hand mold. Thereafter, the dip-molded layer formed on the hand mold was vulcanized by heating in an oven at 130°C for 30 minutes, followed by cooling to room temperature, and was separated from the hand mold after spreading talc to obtain a dip-molded article having a glove shape. Then, the resulting dip-molded article was measured for the thickness of the dip-molded article, tensile strength, and tear strength according to the aforementioned method. The results are shown in Table 1.

<Example 2>

A dip-molded article was produced in the same manner as in Example 1 except that the aqueous dispersion of 6-(4-hydroxy-3,5-di-tert-butylanilino)-2,4-bis(octylthio)-1,3,5-triazine was not added and the amount of the aqueous dispersion of 2,2'-methylenebis(4-methyl-6-tertbutylphenol) added was changed from 1.5 parts to 2.0 parts on a solids basis. The dip-molded article obtained was measured for the thickness, the tensile strength, and the tear strength of the dip-molded article in accordance with the method described above. The results are shown in Table 1.

<Example 3>

A dip-molded article was produced in the same manner as in Example 1 except that the aqueous dispersion of 2,2'-methylenebis(4-methyl-6-tert-butylphenol) and the aqueous dispersion of 6-(4-hydroxy-3,5-di-tert-butylanilino)-2,4-bis(octylthio)-1,3,5-triazine were not added, and instead, on a solids basis, 2.0 parts of an aqueous dispersion of 4,4'-methylenebis(2,6-di-tert-butylphenol) (trade name "Ethanox 702", available from Ethyl Corporation, molecular weight: 425, an antioxidant which is an aromatic compound (a-3) having a hindered phenol structure in each of the two benzene rings forming a diphenylmethane skeleton) was added with respect to 100 parts of the carboxy-modified synthetic polyisoprene in the resulting mixture. The dip-molded article obtained was measured for the thickness, the tensile strength, and the tear strength of the dip-molded article in accordance with the method described above. The results are shown in Table 1.

<Example 4>

A dip-molded article was produced in the same manner as in Example 3 except that the carboxy-modified synthetic polyisoprene latex (A-2) was used instead of the carboxy-modified synthetic polyisoprene latex (A-1). The dip-molded article obtained was measured for the thickness, the tensile strength, and the tear strength of the dip-molded article in accordance with the method described above. The results are shown in Table 1.

<Example 5>

A dip-molded article was produced in the same manner as in Example 3 except that the solids content of the carboxy-modified synthetic polyisoprene latex (A-1) was changed from 40 wt% to 30 wt%. The dip-molded article obtained was measured for the thickness, the tensile strength, and the tear strength of the dip-molded article in accordance with the method described above. The results are shown in Table 1.

<Comparative Example 1>

A dip-molded article was produced in the same manner as in Example 1 except that the aqueous dispersion of 2,2'-methylenebis(4-methyl-6-tert-butylphenol) and the aqueous dispersion of 6-(4-hydroxy-3,5-di-tert-butylanilino)-2,4-bis(octylthio)-1,3,5-triazine were not added, and instead, on a solids basis, 2.0 parts of an aqueous dispersion of a butylated reaction product of p-cresol with dicyclopentadiene (trade name "Wingstay L", available from Goodyear Tire and Rubber Company, molecular weight: 650, melting point: 115°C) was added with respect to 100 parts of the carboxy-modified synthetic polyisoprene in the resulting mixture. The dip-molded article obtained was measured for the thickness, the tensile strength, and the tear strength of the dip-molded article in accordance with the method described above. The results are shown in Table 1.

<Comparative Example 2>

A dip-molded article was produced in the same manner as in Comparative Example 1 except that the solids content of the carboxy-modified synthetic polyisoprene latex (A-1) was changed from 40 wt% to 50 wt%. The dip-molded article obtained was measured for the thickness, the tensile strength, and the tear strength of the dip-molded article in accordance with the method described above. The results are shown in Table 1.

<Comparative Example 3>

A dip-molded article was produced in the same manner as in Example 1 except that the aqueous dispersion of 2,2'-methylenebis(4-methyl-6-tert-butylphenol) and the aqueous dispersion of 6-(4-hydroxy-3,5-di-tert-butylanilino)-2,4-bis(octylthio)-1,3,5-triazine were not added, and instead, on a solids basis, 2.0 parts of an aqueous dispersion of pentaerythritoltetrakis[3-(3,5-di-tert-butyl-4-hydroxyphenyl)propionate] (trade name "Irganox 1010", available from BASF SE, molecular weight: 1120) was added with respect to 100 parts of the carboxy-modified synthetic polyisoprene in the resulting mixture. The dip-molded article obtained was measured for the thickness, the tensile strength, and the tear strength of the dip-molded article in accordance with the method described above. The results are shown in Table 1.

<Comparative Example 4>

A dip-molded article was produced in the same manner as in Example 1 except that the aqueous dispersion of 2,2'-methylenebis(4-methyl-6-tert-butylphenol) and the aqueous dispersion of 6-(4-hydroxy-3,5-di-tert-butylanilino)-2,4-bis(octylthio)-1,3,5-triazine were not added, and instead, on a solids basis, 2.0 parts of an aqueous dispersion of dibutylhydroxytoluene (molecular weight: 220) was added with respect to 100 parts of the carboxy-modified synthetic polyisoprene in the resulting mixture. The dip-molded article obtained was measured for the thickness, the tensile strength, and the tear strength of the dip-molded article in accordance with the method described above. The results are shown in Table 1.

[Table 1]

Table 1

| | Latex composition | | | | | | Molded film | | | | |
|---|---|---|---|---|---|---|---|---|---|---|---|
| | Conjugated diene polymer | | | Antioxidant | | | Film thickness | Tensile strength (*) | | Tear strength (*) | |
| | Type | SI | Compounded amount | Type | Molecular weight | Compounded amount | | BA | AA | BA | AA |
| | (-) | (%) | (part) | (-) | (-) | (part) | (μm) | (MPa) | (MPa) | (N/mm) | (N/mm) |
| Example 1 | Carboxy-modified synthetic polyisoprene | 125 | 100 | 2,2'-Methylenebis(4-methyl-6-tert-butylphenol) | 340 | 1.5 | 230 | 28.5 | 26.1 | 48.8 | 44.9 |
| | | | | 6-(4-Hydroxy-3,5-di-tert-butylanilino)-2,4-bis(octylanilino)-1,3,5-triazine | 589 | 0.5 | | | | | |
| Example 2 | Carboxy-modified synthetic polyisoprene | 125 | 100 | 2,2'-Methylenebis(4-methyl-6-tert-butylphenol) | 340 | 2.0 | 230 | 29.2 | 26.2 | 47.7 | 43.3 |
| Example 3 | Carboxy-modified synthetic polyisoprene | 125 | 100 | 4,4'-Methylenebis(2,6-di-tert-butylphenol) | 425 | 2.0 | 230 | 28.7 | 25.6 | 47.3 | 42.0 |
| Example 4 | Carboxy-modified synthetic polyisoprene | 180 | 100 | 4,4'-Methylenebis(2,6-di-tert-butylphenol) | 425 | 2.0 | 230 | 24.4 | 21.0 | 43.0 | 37.3 |
| Example 5 | Carboxy-modified synthetic polyisoprene | 125 | 100 | 4,4'-Methylenebis(2,6-di-tert-butylphenol) | 425 | 2.0 | 170 | 24.2 | 20.2 | 30.3 | 24.4 |

(continued)

| | Latex composition | | | | | | Molded film | | | | |
|---|---|---|---|---|---|---|---|---|---|---|---|
| | Conjugated diene polymer | | | Antioxidant | | | Film thickness | Tensile strength (*) | | Tear strength (*) | |
| | Type | SI | Compounded amount | Type | Molecular weight | Compounded amount | | BA | AA | BA AA | |
| | (-) | (%) | (part) | (-) | (-) | (part) | ($\mu$m) | (MPa) | (MPa) | (N/mm) | (N/mm) |
| Comparative Example 1 | Carboxy-modified synthetic polyisoprene | 125 | 100 | Butylated reaction product of p-cresol with dicyclopentadiene | 650 | 2.0 | 230 | 27.7 | 22.6 | 47.3 | 22.4 |
| Comparative Example 2 | Carboxy-modified synthetic polyisoprene | 125 | 100 | Butylated reaction product of p-cresol with dicyclopentadiene | 650 | 2.0 | 320 | 27.2 | 26.6 | 44.4 | 28.1 |
| Comparative Example 3 | Carboxy-modified synthetic polyisoprene | 125 | 100 | Pentaerythritoltetrakis [3-(3,5-di-tert-butyl-4-hydroxyphenyl) propionate] | 1120 | 2.0 | 230 | 26.2 | 19.1 | 44.4 | 20.1 |
| Comparative Example 4 | Carboxy-modified synthetic polyisoprene | 125 | 100 | Dibutylhydroxytoluene | 220 | 2.0 | 230 | 25.8 | 21.0 | 41.1 | 19.2 |
| (*) For tensile strength and tear strength, "BA" represents "before aging", and "AA" represents "after aging at 70°C for 7 days". | | | | | | | | | | | |

As shown in Table 1, the molded films having a thickness of 20 to 300 μm and obtained using the latex compositions comprising the conjugated diene polymer latex, the sulfur-based vulcanizing agent, the vulcanization accelerator, and the antioxidant, wherein the antioxidant was at least one selected from phenolic antioxidants and quinoline antioxidants, and had a molecular weight of 300 to 600, had mechanical strength which is less likely to decrease when stored at 70°C (Examples 1 to 5) .

On the other hand, the molded films obtained using an antioxidant having a molecular weight of less than 300 or greater than 600 exhibited a significant decrease in mechanical strength when stored at 70°C (Comparative Examples 1, 3, and 4). The molded film obtained using an antioxidant having a molecular weight of greater than 600 exhibited a significant decrease in mechanical strength when stored at 70°C even in the case where the thickness was greater than 300 mm (Comparative Example 2).

**Claims**

1. A molded film having a thickness of 20 to 300 μm and obtained using a latex composition comprising a conjugated diene polymer latex, a sulfur-based vulcanizing agent, a vulcanization accelerator, and an antioxidant,
   wherein the antioxidant is at least one selected from phenolic antioxidants and quinoline antioxidants, and has a molecular weight of 300 to 600.

2. The molded film according to claim 1, wherein the antioxidant contains at least an aromatic compound (a) having two or more phenolic hydroxyl groups.

3. The molded film according to claim 1 or 2, wherein the antioxidant contains at least an aromatic compound (a-1) having two or more hindered phenol structures.

4. The molded film according to any one of claims 1 to 3, the antioxidant contains at least an aromatic compound (a-2) having a diphenylmethane skeleton having two or more hindered phenol structures.

5. The molded film according to any one of claims 1 to 4, the antioxidant contains an aromatic compound (a) having two or more phenolic hydroxyl groups, and an aromatic compound (b-1) having one phenolic hydroxyl group and one or more -NH- bonds.

6. The molded film according to any one of claims 1 to 5, the conjugated diene polymer latex is a synthetic polyisoprene latex, a styrene-isoprene-styrene block copolymer latex, or a natural rubber latex.

7. The molded film according to any one of claims 1 to 6, the conjugated diene polymer latex is a carboxy-modified conjugated diene polymer latex.

8. The molded film according to any one of claims 1 to 7, the swell index (SI) of the conjugated diene polymer is 105 to 300%.

9. The molded film according to any one of claims 1 to 8, the content of the sulfur-based vulcanizing agent in the latex composition is 0.1 to 1.2 parts by weight with respect to 100 parts by weight of the conjugated diene polymer in the latex composition.

10. The molded film according to any one of claims 1 to 9, the cross-linking accelerator is a xanthogen compound.

## INTERNATIONAL SEARCH REPORT

| | International application No. |
|---|---|
| | PCT/JP2021/025192 |

A.   CLASSIFICATION OF SUBJECT MATTER
Int. Cl. C08L21/02(2006.01)i, C08K5/13(2006.01)i, C08K5/3495(2006.01)i,
C08K5/38(2006.01)i, C08L7/02(2006.01)i, C08L9/10(2006.01)i, C08L13/02(2006.01)i
FI: C08L21/02, C08K5/13, C08K5/3495, C08L7/02, C08L13/02, C08K5/38, C08L9/10

According to International Patent Classification (IPC) or to both national classification and IPC

B.   FIELDS SEARCHED

Minimum documentation searched (classification system followed by classification symbols)
Int. Cl. C08L1/00-101/14, C08K3/00-13/08

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2003-041410 A (MICROFLEX CORP.) 13 February 2003 (2003-02-13), claim 1, paragraphs [0002]-[0004], [0009]-[0014], table 1 | 1-4, 6-7<br>10<br>5, 8-9 |
| X<br>A | JP 2002-125985 A (OKAMOTO INDUSTRIES INC.) 08 May 2002 (2002-05-08), paragraphs [0021], [0022], table 1, comparative example 3 | 1-4, 6<br>5, 7-10 |
| X<br>Y<br>A | WO 2008/117620 A1 (NIPPON ZEON CO., LTD.) 02 October 2008 (2008-10-02), claims 1, 10-11, paragraphs [0013], [0021], [0026]-[0039], [0045], [0060], [0061], [0070], [0073], [0077], table 1, examples 1, 3 | 1-7, 9<br>10<br>8 |

☒   Further documents are listed in the continuation of Box C.          ☒   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06.09.2021 | 14.09.2021 |

| Name and mailing address of the ISA/<br>  Japan Patent Office<br>  3-4-3, Kasumigaseki, Chiyoda-ku,<br>  Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2021/025192 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2020-100738 A (NIPPON ZEON CO., LTD.) 02 July 2020 (2020-07-02), claims 1, 4-5, paragraphs [0002], [0078] | 10 |
| A |  | 1-9 |
| A | JP 2017-214593 A (ALLEGIANCE CORP.) 07 December 2017 (2017-12-07), entire text | 1-10 |
| A | JP 2001-040141 A (NIPPON ZEON CO., LTD.) 13 February 2001 (2001-02-13), entire text | 1-10 |
| A | JP 2007-084591 A (NIPPON ZEON CO., LTD.) 05 April 2007 (2007-04-05), entire text | 1-10 |
| A | JP 06-228375 A (SUMITOMO CHEMICAL CO., LTD.) 16 August 1994 (1994-08-16), entire text | 1-10 |

Form PCT/ISA/210 (continuation of second sheet) (January 2015)

**INTERNATIONAL SEARCH REPORT**
Information on patent family members

| International application No. |
|---|
| PCT/JP2021/025192 |

| Patent Documents referred to in the Report | Publication Date | Patent Family | Publication Date |
|---|---|---|---|
| JP 2003-041410 A | 13.02.2003 | US 6451893 B1<br>EP 1260549 A1<br>claim 1, paragraphs [0001]-[0003], [0008]-[0012]<br>US 2002/0193488 A1<br>US 2004/0176512 A1<br>EP 1352616 A1<br>EP 1555287 A1 | |
| JP 2002-125985 A | 08.05.2002 | (Family: none) | |
| WO 2008/117620 A1 | 02.10.2008 | US 2010/0204397 A1<br>claims 1, 10-11, paragraphs [0038]-[0040], [0058], [0072]-[0094], [0108], [0109], [0135]-[0137], [0151]-[0161], [0165]-[0172], table 1, examples 1, 3<br>TW 200900470 A | |
| JP 2020-100738 A | 02.07.2020 | (Family: none) | |
| JP 2017-214593 A | 07.12.2017 | JP 2013-534555 A<br>US 2012/0021155 A1<br>entire text<br>JP 2016-821 A<br>US 2015/0210880 A1<br>US 2016/0137868 A1<br>US 2017/0145185 A1<br>WO 2011/163662 A1<br>EP 2585289 A1<br>CN 103025514 A<br>KR 10-2013-0141429 A<br>CN 107028664 A<br>CN 107043474 A | |
| JP 2001-040141 A | 13.02.2001 | US 6844385 B1<br>entire text<br>WO 2001/000726 A1<br>EP 1209192 A1<br>TW 520379 B | |
| JP 2007-084591 A | 05.04.2007 | (Family: none) | |
| JP 06-228375 A | 16.08.1994 | US 6310144 B1<br>entire text<br>EP 610070 A1<br>CN 1093724 A<br>KR 10-1994-0019784 A<br>CA 2113743 A1 | |

Form PCT/ISA/210 (patent family annex) (January 2015)

**REFERENCES CITED IN THE DESCRIPTION**

**Patent documents cited in the description**

• JP 2011219543 A